# EUROPÄISCHE PATENTANMELDUNG

(11) **EP 2 963 384 A1**
(43) Veröffentlichungstag der Anmeldung: **06.01.2016**
(21) Anmeldenummer: 14174906.9
(22) Anmeldetag: 30.06.2014
(51) Int. Cl.: G01B 11/275

(54) **Verfahren und Vorrichtung zur Achsvermessung von Kraftfahrzeugen**

(71) Anmelder: ROBERT BOSCH GMBH, 70469 Stuttgart (DE)
(72) Erfinder: Wagmann, Christian, 80538 München (DE); Gyongyosi, Etienn, 93404 Saint Quen (FR); Hodissen, Sven, 80637 München (DE); Backes, Jochen, 80687 München (DE)
(74) Vertreter: Cabinet HERRBURGER

(57) **Zusammenfassung**

Es wird ein Verfahren und eine Vorrichtung zur Achsvermessung von Kraftfahrzeugen mit an den Fahrzeugrädern (10) angeordneten Messeinheiten (30) mit mindestens einer Messzelle (33) vorgeschlagen. Die Messeinheiten (30) sind jeweils mittels einer Halterung (20) am Fahrzeugrad (10) befestigt, wobei das Fahrzeugrad (10) um eine Drehachse (11) drehbar ist, einen Radius r aufweist und auf einer Aufstandstläche (14) aufsitzt. Die Messeinheit (30) wird in Richtung der Aufst-andsfläche (14) in eine unterhalb der Drehachse (11) des Fahrzeugrades (10) liegende Position gebracht. Dazu weist die Halterung (20) einen verstellbaren Träger (27) mit einer Aufnahme (28) zum Aufnehmen der Messeinheit (30) auf. Die Aufnahme (28) des Trägers (27) zum Aufnehmen der Messeinheit (30) befindet sich in einer unterhalb der Drehachse (11) des Fahrzeugrades legenden Position, bei der ein Abstand R' zwischen der Messzelle (33) und der Drehachse (11) des Fahrzeugrades (10) größer ist als der Radius r des Fahrzeugrades (10).

## Beschreibung

### Stand der Technik

Die Erfindung betrifft ein Verfahren und eine Vorrichtung zur Achsvermessung von Kraftfahrzeugen mit an den Fahrzeugrädern angeordneten Messeinheiten nach dem Oberbegriff der unabhängigen Ansprüche.

Zur Achsvermessung von Lastkraftwagen werden in der Regel spezielle Messeinheiten benötigt, die jeweils eine an einem Ausleger angebrachte elektrooptische Messzelle aufweisen, wobei die Messeinheiten im Wesentlichen auf der Drehachse des Fahrzeugrades angeordnet sind. Damit die Messzellen am Fahrzeugrad in Querrichtung ausreichend "Sicht" haben, sind die Ausleger gekröpft ausgeführt, so dass die Messzellen unterhalb der Drehachse der Fahrzeugräder in Richtung der Aufstandsfläche der Fahrzeugreifen positioniert werden können. Nur so ist eine einwandfreie Querreferenzierung der sich an den beiden Fahrzeugrädern einer Achse gegenüberliegenden Messzellen möglich.

Eine Verwendung von Messeinheiten von Personenkraftwagen auch bei Lastkraftwagen ist in der Regel nicht möglich, da die Ausleger bei diesen Messeinheiten nicht gekröpft ausgeführt sind und die Ausleger keine ausreichende Länge aufweisen, um einen größeren Reifendurchmesser zu überspannen. Die Messzellen dieser Messeinheiten bleiben daher durch die Reifen der Lastkraftwagen abgeschattet, so dass eine Querreferenzierung mit dieser Bauform nicht möglich ist.

Aufgrund dieses Sachverhaltes benötigen Werkstätten, die sowohl Achsvermessungen an Personenkraftwagen als auch an Lastkraftwagen durchführen, zwei unterschiedliche Bauformen von Messeinheiten. Dies bedeutet, dass in der Regel nicht nur unterschiedliche Messeinheiten benötigt werden, sondern komplett unterschiedliche Achsvermessungsgeräte bereitgehalten werden müssen.

Aus Prospektmaterial der Firma Beissbarth GmbH, München, ist unter der Bezeichnung "Universalhalter" bereits eine Halterung mit einem Träger zur Aufnahme von Messeinheiten bekannt, bei der der Träger verschiebbar an der Haltung angeordnet ist, um so eine Verstellung der Messeinheit am Fahrzeugrad zu ermöglichen.

Der Erfindung liegt die Aufgabe zugrunde, eine Möglichkeit zu schaffen, dass die gleichen Messeinheiten von Achsvermessungsgeräten sowohl an Kraftfahrzeugen mit kleinen Fahrzeugrädern als auch an Kraftfahrzeugen mit wesentlich größeren Fahrzeugrädern eingesetzt werden können.

### Offenbarung der Erfindung

Das erfindungsgemäße Verfahren und die erfindungsgemäße Vorrichtung mit den kennzeichnenden Merkmalen der unabhängigen Ansprüche haben den Vorteil, dass Messeinheiten mit einem Ausleger für Fahrzeugräder mit einem kleinen Durchmesser auch für Fahrzeugräder mit einem wesentlich größeren Raddurchmesser verwendet werden können. Durch eine entsprechende Verschiebung der Messeinheit in Richtung der Aufstandsfläche des Fahrzeugrades erhält die Messzelle der Messeinheit eine Position, die außerhalb des äußeren Radius des Reifens des Fahrzeugrades liegt, so dass ein ungehinderter optischer Strahlengang zwischen gegenüberliegenden Messzellen an einer Radachse gewährleistet ist. Dadurch kann eine Werkstatt mit einem einzigen Achsvermessungsgerät, welches für die Achsvermessung von Personenkraftwagen ausgelegt ist, auch Achsvermessungen an Fahrzeugen mit größeren Raddurchmessern, bis hin zum Lastkraftwagen durchführen. Dies ist auch deshalb von Vorteil, weil die Achsvermessungsgeräte für Personenkraftwagen eine einfachere Bauform aufweisen und kostengünstiger in der Herstellung sind als solche für Lastkraftwagen.

Gemäß einer ersten vorteilhaften Ausführung wird die Messeinheit durch Verschiebung eines an der Halterung angeordneten verstellbaren Trägers in Richtung der Aufstandsfläche in die unterhalb der Drehachse des Fahrzeugrades liegende Position gebracht. Die Verschiebung erfolgt zweckmäßigerweise im Wesentlichen vertikal in Richtung der Aufstandsfläche mit einem Verstellweg e, wobei der Verstellweg e so bemessen sein muss, dass der sich zwischen der Drehachse des Fahrzeugrades und der Messzelle einstellende Abstand R größer ist als der äußere Radius r des Fahrzeugrades.

Der Abstand zwischen der Messzelle und der Drehachse des Fahrzeugrades lässt sich durch eine zweite vorteilhafte Ausführung vergrößern, indem zusätzlich zur Verschiebung des Trägers um den Verstellweg e die Halterung eine Drehung um einen Drehwinkel α erfährt. Die Drehung der Halterung um den Drehwinkel α kann durch Drehen oder Abrollen des Fahrzeugrades entgegengesetzt zur Fahrtrichtung des Fahrzeuges erfolgten. Durch die Verschiebung des Trägers um den Verstellweg e und durch die zusätzliche Drehung der Halterung um den Drehwinkel α wird der Abstand des Messkopfes von der Drehachse des Fahrzeugrades auf einen Abstand R' vergrößert, indem die Messzelle bei einer beibehaltenen waagerechten Ausrichtung der Messeinheit zusätzlich eine horizontale Verschiebung x in Fahrtrichtung des Fahrzeuges erhält. Der Verstellweg e und die Drehung der Halterung muss dabei so bemessen sein, dass der sich zwischen dem Messkopf und der Drehachse des Fahrzeugrades einstellende Abstand R' größer ist als der äußere Radius r des Fahrzeugrades.

Die Durchführung des erfindungsgemäßen Verfahrens erfolgt mittels einer Vorrichtung, bei der die Halterung eine Führung aufweist, an der der Träger verstellbar geführt ist, wobei die Führung für den Träger im Wesentlichen senkrecht zur Aufstandsfläche ausgerichtet ist, so dass der Träger ausgehend von der Mittelposition durch eine im Wesentlichen vertikale Verschiebung in Richtung der Aufstandsfläche um den Verstellweg e unterhalb der Drehachse des Fahrzeugrades positioniert werden kann, wobei diese Position ebenfalls die Messeinheit einnimmt.

Die Durchführung des erfindungsgemäßen Verfahrens gemäß der zweiten Ausführungsform erfolgt mittels einer Vorrichtung, bei der der Träger um einen

Verstellweg e aus einer Mittelposition in die unterhalb der Drehachse des Fahrzeugrades liegenden Position verschoben ist und zusätzlich dazu die Halterung eine Drehung um einen Drehwinkel α aufweist. Bei der Drehung um den Drehwinkel α schwenkt die Messeinheit auf einen Kreisbogen mit dem Radius des Verstellweges e in Fahrtrichtung des Kraftfahrzeuges, wobei die Messeinheit während der Drehung in der waagerechten Ausrichtung verbleibt oder nach der Drehung diese wieder einnimmt. Dadurch erhält die Messzelle eine zusätzliche horizontale Verschiebung x in Fahrtrichtung des Kraftfahrzeuges. Dementsprechend vergrößert sich der Abstand des Messkopfes von der Drehachse des Fahrzeugrades auf einen Abstand R'.

Der Drehwinkel α lässt sich durch einen in der Messeinheit enthaltenen Messwertgeber erfassen, sofern diese während der Drehung stabil in einer waagerechten Ausrichtung bleibt. Der Drehwinkel α lässt sich aber auch durch mindestens eine an der Halterung angebrachte Winkelmesseinrichtung einstellen.

### Ausführungsbeispiele

Ausführungsbeispiele der Erfindung sind in der Zeichnung dargestellt und in der nachfolgenden Beschreibung näher erläutert.

Es zeigen:
- Figur 1: eine schematische Darstellung eines Fahrzeugrades mit einer Anordnung einer Messeinheit in einer Mittelposition gemäß dem Stand der Technik,
- Figur 2: eine schematische Darstellung eines Fahrzeugrades mit einer Anordnung einer Messeinheit gemäß einem ersten Ausführungsbeispiel,
- Figur 3: eine schematische Darstellung eines Fahrzeugrades mit einer Anordnung einer Messeinheit gemäß einem zweiten Ausführungsbeispiel und
- Figur 4: eine Halterung zur Aufnahme einer Messeinheit.

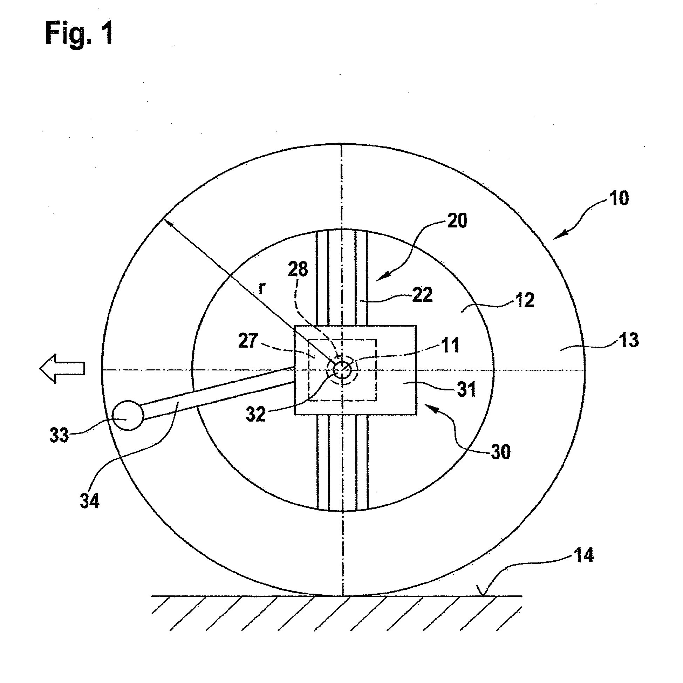

Die Figuren 1, 2 und 3 zeigen jeweils ein vorderes linkes Fahrzeugrad 10 eines Kraftfahrzeuges mit einer Felge 12 und einem Reifen 13, wobei der Reifen 13 auf einer Aufstandsfläche 14 aufsitzt. Das Fahrzeugrad 10 dreht sich um eine schematisch dargestellte Drehachse 11 einer Radachse und weist einen äußeren Radius r auf. Zu einem Achsvermessungsgerät gehören in der Regel vier Messeinheiten 30, wobei an jedem Fahrzeugrad 10, mindestens jedoch an jedem Fahrzeugrad 10 einer Radachse jeweils eine Messeinheit 30 montiert wird. Die gedachte Fahrtrichtung des Fahrzeuges ist durch einen Pfeil angedeutet.

An der Felge 12 ist eine Halterung 20 mit einem Träger 27 befestigt, an dem die Messeinheit 30 mit einer Messzelle 33 angeordnet ist. Die Messzelle 33 weist mindestens einen elektrooptischen Sensor auf, so dass eine Querreferenzierung der an den beiden Fahrzeugrädern einer Achse gegenüberliegenden Messzellen möglich ist. Der Träger 27 ist an einer Führung 22 verstellbar geführt.

Die Messeinheit 30 weist ein Gehäuse 31 auf, das an einer Steckachse 32 mittels eines nicht dargestellten Mechanismus schwenkbar gelagert ist. Dazu weist der Träger 27 eine Aufnahme 28 zum Aufnehmen der Steckachse 32 auf. Zur Anordnung der Messeinheit 30 an der Halterung 20 wird die Steckachse 32 in der Aufnahme 28 des Trägers 27 fixiert. Der Mechanismus zum Schwenken der Messeinheit 30 funktioniert so, dass bei einer Drehung des Fahrzeugrades 10 oder einer Drehung der Halterung 20 die Messeinheit 30 in ihrer waagerechten Lage verbleibt oder durch Lösen einer Feststellung die Messeinheit 30 zurück in ihre waagerechte Lage schwenkt.

Am Gehäuse 31 ist weiterhin ein Ausleger 34 befestigt, der in Fahrtrichtung des Kraftfahrzeugs beispielsweise schräg nach unten weist. Die Messzelle 33 ist am Ende des Auslegers 34 angeordnet. Die schräg nach unten gerichtete Anordnung des Auslegers 34 ist dadurch notwendig, damit die Messzelle 33 einen unterhalb der Radachse liegenden freien Strahlengang zu einer am gegenüberliegenden rechten Fahrzeugrad angeordneten weiteren Messzelle einer weiteren Messeinheit hat.

Bei dem in Figur 1 dargestellten Ausführungsbeispiel des Standes der Technik ist die Halterung 20 an der Felge 12 so montiert, dass die Führung 22 für den Träger 27 im Wesentlichen senkrecht zur Aufstandsfläche 14 ausgerichtet ist. Der Träger 27 der Halterung 20 befindet sich hierbei in einer Mittelposition am Fahrzeugrad 11. Dazu liegen die Achsen der Aufnahme 28 für die Steckachse 32 und der Drehachse 11 des Fahrzeugrades 10 im Wesentlichen fluchtend aufeinander. In dieser Mittelposition reicht die Länge des Auslegers 34, die kleiner ist als der Radius r, nicht aus, um eine Lage der Messzelle 33 außerhalb des Reifendurchmessers des Fahrzeugrades 10 zu erreichen. Die Messzelle 33 liegt damit im Schatten des Reifens 12, so dass eine Querreferenzierung der Messzellen 33 der beiden sich gegenüberliegenden Messeinheiten 30 einer Fahrzeugachse nicht möglich ist.

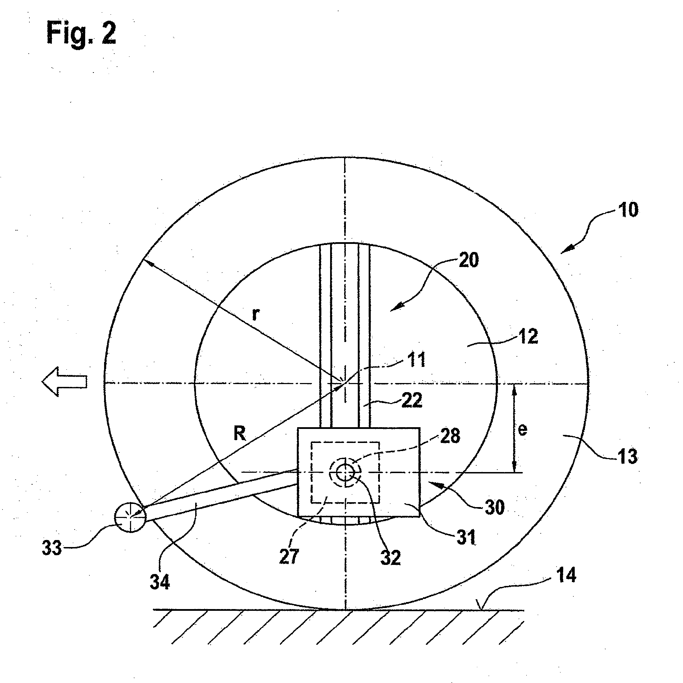

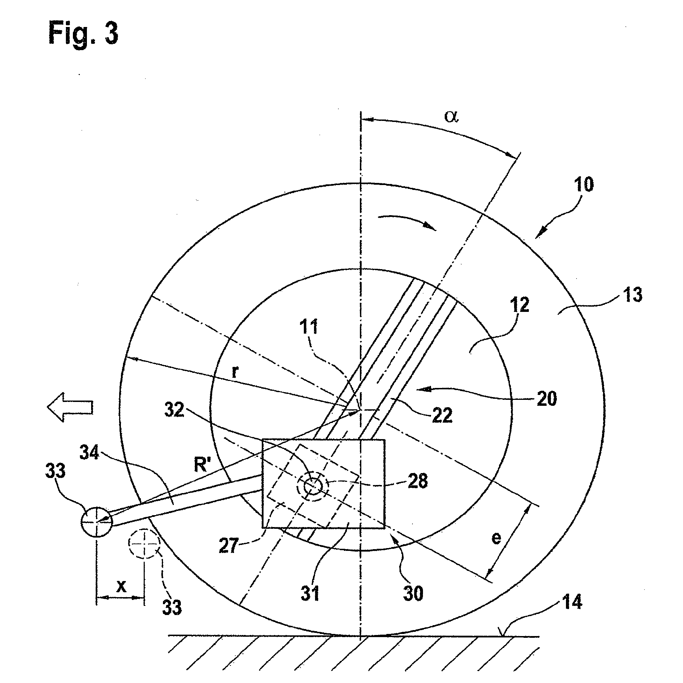

Abhilfe wird durch die Anordnung der Messeinheiten 30 an der Halterung 20 bzw. am Fahrzeugrad 10 gemäß den Ausführungsbeispielen in Figur 2 und 3 und durch die dazu eingesetzten Verfahren geschaffen.

Beim Ausführungsbeispiel in Figur 2 ist die Halterung 20 an der Felge 12 ebenfalls so montiert, dass die Führung 22 für den Träger 27 im Wesentlichen senkrecht zur Aufstandsfläche 14 ausgerichtet ist. Anders als in Figur 1 ist aber die Messeinheit 30 in einer zur Aufstandsfläche 14 gerichteten tieferen Position an der Halterung 20 angeordnet. Dazu wird der Träger 23 aus der Mittelposition gemäß Figur 1 in eine unterhalb der Drehachse 11 des Fahrzeugrades 10 liegenden Position gebracht, so dass die Achse der Aufnahme 28 und damit die Achse der Steckachse 32 um einen Verstellweg e in Richtung der Aufstandsfläche 14 unterhalb der Drehachse 11 des Fahrzeugrades liegt. Durch die im Wesentlichen senkrechte Anordnung der Führung 22 erfährt der Träger 27 eine im Wesentlichen vertikale Verschiebung in Richtung der Aufstandsfläche 14 um den Verstellweg e. Der Verstellweg e muss dabei so bemessen sein, dass ein sich zwischen der Messzelle 33 und der Drehachse 11 des Fahrzeugrades 10 einstellender Abstand R größer ist als der äußere Radius r des Fahrzeugrades 10. Dadurch erhält die Messeinheit 30 eine Position, bei der sich die Messzelle 33 außerhalb des Reifens 13 des Fahrzeugrades 10 befindet.

Beim Ausführungsbeispiel in Figur 3 wird zusätzlich zu der Verschiebung der Messeinheit 30 mittels des Trägers 27 um den Verstellweg e gemäß Figur 2 die Halterung 20 um einen Drehwinkel α verstellt. Die Drehung der Halterung 20 erfolgt dadurch, indem das Fahrzeugrad 10 um den gleichen Drehwinkel α entgegengesetzt zur Fahrtrichtung gedreht wird oder abrollt.

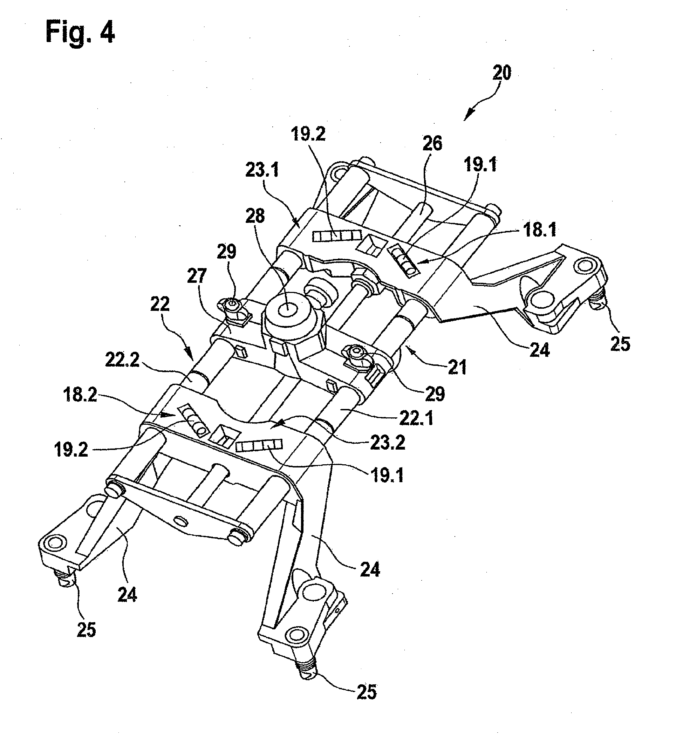

Nach erfolgter Drehung des Fahrzeugrades 10 befindet sich die Messeinheit 30, wie bereits erwähnt, wieder in der waagerechten Ausrichtung wie in Figur 2 dargestellt. Der Drehwinkel α wird dabei beispielsweise mittels eines in der Messeinheit 30 eingebauten Drehgebers ermittelt. Mittels des vom Drehgeber ermittelten Drehwinkels α ist es möglich, eine gleiche Position der Messeinheiten 30 an allen vier Fahrzeugrädern 10 bzw. zumindest an den zwei Fahrzeugrädern 10 einer Radachse zu gewährleisten. Als Alternative kann der gleiche Drehwinkel α an allen vier Fahrzeugrädern 10 bzw. zumindest an den zwei Fahrzeugrädern 10 einer Radachse durch eine in Figur 4 später beschriebene Winkelmesseinrichtung eingestellt werden.

Durch die Drehung der Halterung 20 um den Drehwinkel α wird die Achse der Aufnahme 28 bzw. die Achse der Steckachse 32 und somit die Messeinheit 30 auf einen Kreisbogen mit einem Radius des Verstellweges e in Fahrtrichtung des Kraftfahrzeuges geschwenkt. Dabei behält die Messeinheit 30, wie bereits erwähnt, ihre waagerechte Ausrichtung an der Halterung 20 bei oder wird nach der Drehung wieder in ihre waagerechte Ausrichtung gebracht.

Durch die Kombination mit der Verschiebung der Messeinheit 30 an der Führung 22 des Trägers 27 um den Verstellweg e und mit der zusätzlichen Drehung der Halterung 20 um den Drehwinkel α erhält die Messzelle 33 eine zusätzliche horizontale Verschiebung x in Fahrtrichtung des Kraftfahrzeuges. Durch die horizontale Verschiebung x vergrößert sich der Abstand zwischen der Messzelle 33 und der Drehachse 11 des Fahrzeugrades 10 auf einen Abstand R'. Dadurch kann die Messzelle 33 einen größeren Raddurchmesser r überspannen, wie der Vergleich mit der gestrichelt dargestellten Position der Messzelle 33 ohne Drehung der Halterung 20 zeigt.

Figur 4 zeigt eine Ausführungsform der Halterung 20 mit einem verstellbaren Träger 27 im Detail. Die Halterung 20 weist dazu ein Gestell 21 mit der bereits erwähnten Führung 22 auf. Die Führung 22 umfasst beispielsweise zwei Führungsstangen 22.1 und 22. 2, an denen zwei Spannkörper 23.1 und 23.2 mit jeweils zwei Spannarmen 24 verschiebbar geführt sind. An den jeweils zwei Spannarmen 24 sind jeweils zwei Spannklauen 25 angeordnet. Die Spannkörper 23.1, 23.2 sind mittels einer am Gestell 21 gelagerten Spindel 26 an den Führungsstangen 22.1 und 22.2 verstellbar. Mittels der Spindel 26 werden die Spannkörper 23.1, 23.2 radial bewegt, so dass sich die Spannklauen 25 an der Felge 12 des Fahrzeugrades 10 verspannen können. Dadurch erhält die Halterung 20 eine feste Position am Fahrzeugrad 10. In der Praxis wird die Halterung 20 so befestigt, dass sich die Führungsstangen 22 im Wesentlichen senkrecht zur Aufstandsfläche 14 am Fahrzeugrad 10 befinden, wie in Figur 1 und 2 dargestellt.

An den Führungsstangen 22.1 und 22.2 ist weiterhin der Träger 27 mit der Aufnahme 28 verstellbar angeordnet. Dazu sind beispielsweise am Träger 27 zwei Klemmschrauben 29 vorgesehen, mit denen der Träger 27 an den Führungsstangen 22.1 und 22.2 festklemmbar ist. Durch Lösen der Klemmschrauben 29 kann der Träger 27 aus der in Figur 1 dargestellten Mittelstellung in eine außermittige Stellung gemäß Figur 2 und 3 verschoben werden. In der eingestellten außermittigen Stellung wird der Träger 27 durch Feststellen der Klemmschrauben 28 wieder fixiert.

Wie bereits erwähnt, kann zur Ermittlung des Drehwinkels α bei zusätzlicher Drehung der Halterung 20 eine Winkelmesseinrichtung eingesetzt werden. Im vorliegenden Ausführungsbeispiel wird die Winkelmesseinrichtung von zwei Nivelliereinrichtungen 18.1 und 18.2 gebildet, wobei die eine Nivelliereinrichtung 18.1 an dem einen Spannkörper 23.1 und die andere Nivelliereinrichtung 18.2 an dem anderen Spannkörper 23.2 angeordnet ist. Die Nivelliereinrichtungen 18.1 und 18.2 weisen jeweils zwei im gleichen Winkel angeordnete Libellen 19.1 und 19.2 auf.

Mittels zumindest einer der Nivelliereinrichtungen 18.1, 18.2 können die Halterungen 20 an allen vier Fahrzeugrädern 10 des Kraftfahrzeuges bzw. zumindest an den beiden Fahrzeugrädern 10 einer Radachse in eine im Wesentlichen gleiche Drehlage gebracht werden. Dies kann so erfolgen, indem ausgehend von einer waagerechten Lage der einen Libelle 19.1 das Fahrzeugrad 10 mit der Halterung 20 gedreht wird bis die andere Libelle 19.2 in ihrer waagerechten Lage liegt. Wenn die Halterung 20, wie beschrieben, von der waagerechten Lage der einen Libelle 19.1 in die waagerechte Lage der anderen Libelle 19.2 gedreht wird, ergibt sich für die Drehung der Halterung 20 ein Drehwinkel α, der das Zweifache des Winkels der winkligen Anordnung der Libelle 19.1, 19.2 beträgt.

## Patentansprüche

1. Verfahren zur Achsvermessung von Fahrzeugen mit an Fahrzeugrädern (10) angeordneten Messeinheiten (30) mit mindestens einer Messzelle (33), wobei die Messeinheiten (30) jeweils mittels einer Halterung (20) am Fahrzeugrad (10) befestigt sind, wobei das Fahrzeugrad (10) um eine Drehachse (11) drehbar ist, einen äußeren Radius r aufweist und auf einer Aufstandsfläche (14) aufsitzt, **dadurch gekennzeichnet, dass** die Messeinheit (30) in Richtung der Aufstandsfläche (14) in eine unterhalb der Drehachse (11) des Fahrzeugrades (10) liegende Position gebracht wird, so dass die Messzelle (33) eine Position außerhalb des äußeren Radius r des Fahrzeugrades (10) einnimmt.

2. Verfahren nach Anspruch 1, **dadurch gekennzeichnet, dass** die Messeinheit (30) durch Verschiebung eines an der Halterung (20) angeordneten verstellbaren Trägers (27) in die unterhalb der Drehachse (11) des Fahrzeugrades (10) liegende Position gebracht wird.

3. Verfahren nach Anspruch 2, **dadurch gekennzeichnet, dass** die Verschiebung des Trägers (27) im Wesentlichen vertikal zur Aufstandsfläche (14) erfolgt.

4. Verfahren nach Anspruch 2 oder 3, **dadurch gekennzeichnet, dass** die Verschiebung des Trägers (27) an der Halterung (20) mit einem Verstellweg e erfolgt, wobei der Verstellweg e so bemessen ist, dass der sich zwischen der Messzelle (33) und der Drehachse (11) des Fahrzeugrades (10) einstellende Abstand R größer ist als der äußere Radius r des Fahrzeugrades (10).

5. Verfahren nach Anspruch 4, **dadurch gekennzeichnet, dass** zusätzlich zur Verschiebung des Trägers (27) um den Verstellweg e die Halterung (20) eine Drehung um einen Drehwinkel α erhält, und dass die Messeinheit (30) eine waagerechte Ausrichtung während der Drehung beibehält oder nach der Drehung wieder einnimmt.

6. Verfahren nach Anspruch 5, **dadurch gekennzeichnet, dass** die Drehung der Halterung (30) um den Drehwinkel α durch Drehen oder Abrollen des Fahrzeugrades (10) entgegengesetzt zur Fahrtrichtung des Kraftfahrzeuges erfolgt.

7. Verfahren nach Anspruch 5 oder 6, **dadurch gekennzeichnet, dass** durch die Verschiebung des Trägers (27) um den Verstellweg e und durch die Drehung der Halterung (20) um den Drehwinkel α bei einer waagerechten Ausrichtung der Messeinheit (30) an der Halterung (20) die Messzelle (33) eine horizontale Verschiebung x in Fahrtrichtung des Fahrzeuges erhält, so dass sich der zwischen der Messzelle (33) und der Drehachse (11) des Fahrzeugrades (10) einstellende Abstand auf einen Abstand R' vergrößert.

8. Vorrichtung zur Achsvermessung von Fahrzeugen mit einer an einem Fahrzeugrad (10) montierten Halterung (20), an der eine Messeinheit (30) mit mindestens einer Messzelle (33) angeordnet ist, wobei die Halterung (20) einen verstellbaren Träger (27) mit einer Aufnahme (28) zum Aufnehmen der Messeinheit (30) aufweist, wobei das Fahrzeugrad (10) um eine Drehachse (11) drehbar ist, einen äußeren Radius r aufweist und auf einer Aufstandsfläche (14) aufsitzt, **dadurch gekennzeichnet, dass** der Träger (27) am Fahrzeugrad (10) so positioniert ist, dass sich die Aufnahme (28) des Trägers (27) zum Aufnehmen der Messeinheit (30) in einer unterhalb der Drehachse (11) des Fahrzeugrades (10) liegenden Position befindet.

9. Vorrichtung nach Anspruch 8, **dadurch gekennzeichnet, dass** die Halterung (20) eine Führung (22) aufweist, an der der Träger (27) verstellbar geführt ist, dass die Führung (22) für den Träger (27) im Wesentlichen senkrecht zur Aufstandsfläche (14) ausgerichtet ist, und dass die Aufnahme (28) durch eine im Wesentlichen vertikale Verschiebung des Trägers (27) in Richtung der Aufstandsfläche (14) um einen Verstellweg e unterhalb der Drehachse (11) des Fahrzeugrades (10) positioniert ist, wobei der Verstellweg e so bemessen ist, dass der sich zwischen der Messzelle (33) und der Drehachse (11) des Fahrzeugrades (10) einstellende Abstand R größer ist als der äußere Radius r des Fahrzeugrades (10).

10. Vorrichtung nach Anspruch 8, **dadurch gekennzeichnet, dass** der Träger (27) aus einer Mittelposition um einen Verstellweg e am Fahrzeugrad (10) in Richtung der Aufstandsfläche (14) verschoben ist, dass zusätziich dazu die Halterung (20) eine Drehung um einen Drehwinkel α aufweist, so dass bei einer waagerechten Ausrichtung der Messeinheit (30) die Messzelle (33) zusätzlich eine horizontale Verschiebung x in Fahrtrichtung des Fahrzeuges erfährt, wobei der Verstellweg e und die Drehung der Halterung so bemessen sind, dass der sich zwischen der Messzelle (33) und der Drehachse (11) des Fahrzeugrades (10) einstellende Abstand auf einen Abstand R' vergrößert.

11. Vorrichtung nach Anspruch 10, **dadurch gekennzeichnet, dass** die Messeinheit (30) einen Messwertgeber umfasst, der den Drehwinkel α erfasst.

12. Vorrichtung nach Anspruch 10, **dadurch gekennzeichnet, dass** die Halterung (20) mindestens eine Winkelmesseinrichtung (18) aufweist, mit welcher der Drehwinkel α einstellbar ist.
